# EUROPEAN PATENT APPLICATION

(11) **EP 4 746 181 A1**
(43) Date of publication of application: **20.05.2026**
(21) Application number: 24854492.6
(22) Date of filing: 16.08.2024
(51) Int. Cl.: H01M 50/533, H01M 50/54, H01M 50/534

(54) **ELECTRODE CURRENT COLLECTOR, ELECTRODE ASSEMBLY COMPRISING ELECTRODE CURRENT COLLECTOR, AND METHOD FOR MANUFACTURING ELECTRODE CURRENT COLLECTOR**

(30) Priority: 17.08.2023 KR 20230107801; 13.08.2024 KR 20240108650
(71) Applicant: LG Energy Solution, Ltd., Seoul 07335 (KR)
(72) Inventor: KANG, Gyung Soo, Daejeon 34122 (KR); YU, Hyung Kyun, Daejeon 34122 (KR)
(74) Representative: Hoffmann Eitle
(86) International application number: PCT/KR2024/012241
(87) International publication number: WO 2025/037941

(57) **Abstract**

The present invention relates to an electrode current collector, an electrode assembly including the electrode current collector, and a method for manufacturing the electrode current collector. The electrode current collector according to the present invention includes an electrode tab extending from an end portion, and includes a polymer layer and a first metal layer and a second metal layer stacked on respective surfaces of the polymer layer. A metal wedge inserted so as to reach the polymer layer is positioned on at least one of the first metal layer or the second metal layer of the electrode tab.

## Description

### TECHNICAL FIELD

### CROSS-REFERENCE TO RELATED APPLICATIONS

The present application claims priority to Korean Patent Application No. 10-2023-0107801 filed on August 17, 2023 and Korean Patent Application No. 10-2024-0108650 filed on August 13, 2024 in the Republic of Korea, the disclosures of which are incorporated herein by reference.

### TECHNICAL FIELD

The present disclosure relates to an electrode current collector, an electrode assembly including the electrode current collector, and a method for manufacturing the electrode current collector.

### BACKGROUND ART

Secondary batteries are rechargeable unlike primary batteries, and have been heavily researched and developed in recent years due to their potential for miniaturization and large capacity. As the technology development and demand for electric vehicles, energy storage systems (ESSs), mobile devices, and the like increase, the demand for secondary batteries as an energy source is rapidly increasing. However, the safety of secondary batteries is not keeping up with the pace of technological advancement. To solve this problem, there is a method for improving safety by creating an electrical short before the abnormal behavior of secondary batteries to drain energy or by short-circuiting the electrical connection.

Secondary batteries are classified into coin type batteries, cylindrical batteries, prismatic batteries, and pouch type batteries depending on the shape of a battery case. In a secondary battery, the electrode assembly mounted inside the battery case is a power generating element that can be charged and discharged with a stacked structure of electrodes and separators.

The electrode assembly may be roughly classified into a jelly-roll type in which a sheet-like positive electrode and negative electrode where an active material is applied to a current collector having a separator interposed therebetween are wound, a stack type in which multiple positive electrodes and negative electrodes are sequentially stacked with a separator interposed therebetween, and a stack/folding type in which the stack-type unit cells are wound with a long separation film.

### SUMMARY

### TECHNICAL PROBLEM

The present disclosure is directed to providing an electrode current collector having improved weldability, an electrode assembly including the electrode current collector, and a method for manufacturing the electrode current collector.

### TECHNICAL SOLUTION

An electrode current collector according to an embodiment of the present disclosure is an electrode current collector including an electrode tab extending at an end, and may include a polymer layer and a first metal layer and a second metal layer laminated on both surfaces of the polymer layer, wherein in the electrode tab, a metal wedge inserted into the polymer layer may be positioned in at least one of the first metal layer or the second metal layer.

Additionally, an electrode assembly according to an embodiment of the present disclosure is an electrode assembly in which electrodes and separators are alternately stacked, wherein the electrode may include an electrode current collector including an electrode tab extending at an end, and the electrode current collector may include a polymer layer and a first metal layer and a second metal layer laminated on both surfaces of the polymer layer in the stacking direction, wherein in the electrode tab, a metal wedge inserted into the polymer layer may be positioned in at least one of the first metal layer or the second metal layer.

In addition, a method for manufacturing the electrode current collector according to an embodiment of the present disclosure may include a lamination process for laminating a first metal layer and a second metal layer on both surfaces of a polymer layer to form a stack; a tab formation process for forming an electrode tab by notching an end portion of the stack; and a wedge insertion process for inserting a metal wedge inserted into the polymer layer in at least one of the first metal layer or the second metal layer in the electrode tab.

### ADVANTAGEOUS EFFECTS

According to the present disclosure, in an electrode current collector in which metal layers are laminated on both surfaces of a polymer layer, metal wedges in the metal layer located at the part forming the electrode tab are inserted into the polymer layer, thereby having an effect of significantly improving weldability.

### BRIEF DESCRIPTION OF THE DRAWINGS

FIG. 1 is a perspective view showing an electrode current collector according to an embodiment of the present disclosure.
FIG. 2 is a cross-sectional view showing a first example of an electrode tab in an electrode current collector according to an embodiment of the present disclosure.
FIG. 3 is a perspective view showing an example of an electrode wedge in an electrode current collector according to an embodiment of the present disclosure.
FIG. 4 is a perspective view showing another example of an electrode wedge in an electrode current collector according to an embodiment of the present disclosure.
FIG. 5 is a cross-sectional view showing a second example of an electrode tab in an electrode current collector according to an embodiment of the present disclosure.
FIG. 6 is a cross-sectional view showing a third example of an electrode tab in an electrode current collector according to an embodiment.
FIG. 7 is a cross-sectional view showing a fourth example of an electrode tab in an electrode current collector according to an embodiment.
FIG. 8 is a cross-sectional view showing an electrode assembly according to an embodiment of the present disclosure.
FIG. 9 is a side view showing an electrode assembly according to an embodiment of the present disclosure.
FIG. 10 is a perspective view showing an electrode tab of an electrode current collector in an electrode assembly according to an embodiment of the present disclosure.
FIG. 11 is a cross-sectional view showing a secondary battery including an electrode current collector according to an embodiment of the present disclosure.
FIG. 12 is a perspective view showing a lamination process in a method for manufacturing an electrode current collector according to an embodiment of the present disclosure.
FIG. 13 is a perspective view showing a tab formation process in a method for manufacturing an electrode current collector according to an embodiment of the present disclosure.
FIG. 14 is a perspective view showing a tab wedge insertion process in a method for manufacturing an electrode current collector according to an embodiment of the present disclosure.
FIG. 15 is a perspective view showing a tab wedge insertion process through a roll in a method for manufacturing an electrode current collector according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Electrode current collector according to embodiment

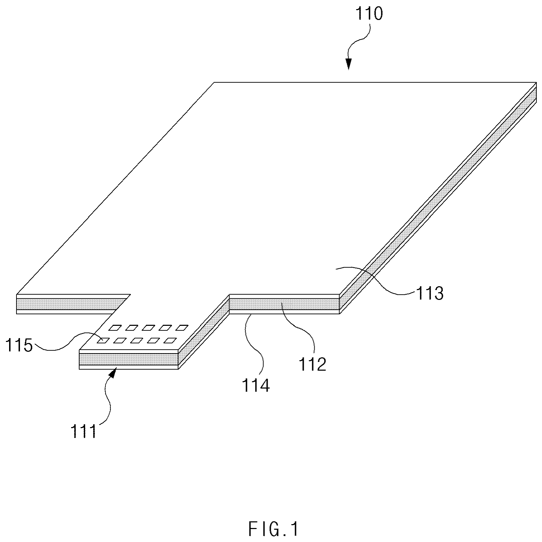

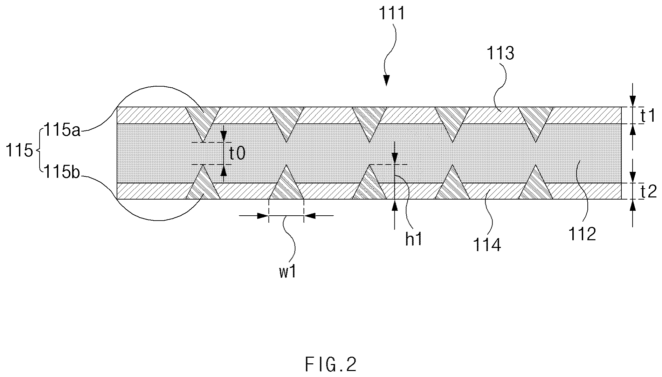

FIG. 1 is a perspective view showing an electrode current collector according to an embodiment of the present disclosure, and FIG. 2 is a cross-sectional view showing a first example of an electrode tab in an electrode current collector according to an embodiment of the present disclosure.

Referring to FIGS. 1 and 2, the electrode current collector 110 according to an embodiment of the present disclosure is an electrode current collector 110 including an electrode tab 111 extending at an end, and includes a polymer layer 112 and a first metal layer 113 and a second metal layer 114 laminated on both surfaces of the polymer layer 112, wherein in the electrode tab 111, a metal wedge 115 is positioned in at least one of the first metal layer 113 or the second metal layer 114.

More specifically, the electrode current collector 110 includes an electrode tab 111 extending at an end. That is, the electrode tab 111 may be formed by notching the end of the electrode current collector 110.

Additionally, the electrode current collector 110 includes a polymer layer 112 and a first metal layer 113 and a second metal layer 114 laminated on both surfaces of the polymer layer 112 in the stacking direction. Here, the polymer layer 112 is a layer including a polymer material, and the first metal layer 113 and the second metal layer 114 are layers including a metal material. Therefore, the electrode current collector 110 is provided in a form where the first metal layer 113 and the second metal layer 114 are laminated on both surfaces of the polymer layer 112, which may prevent the occurrence of a fire due to excessive current density occurring when formed of only a metal material. In addition, the electrode current collector 110 may form the first metal layer 113 and the second metal layer 114 thinly on both surfaces thereof, so that the risk of a shorting due to a metal burr or the like may be low in the event of breaking.

In addition, for example, the thickness of the polymer layer 112 may be 2 to 14 um, and the thicknesses of the first metal layer 113 and the second metal layer 114 may be 0.2 to 3 um.

The metal wedge 115 is inserted into to at least one of the first metal layer 113 or the second metal layer 114 in the electrode tab 111, up to the polymer layer 112. In this case, the height h1 of the metal wedge 115 inserted into the first metal layer 113 or the second metal layer 114 may be greater than the thicknesses t1, t2 of the first metal layer 113 and the second metal layer 114.

Additionally, the metal wedge 115 may include a metal material. In addition, the metal wedge 115 may include, for example, the same material as the material of the first metal layer 113 and the second metal layer 114.

And, the metal wedge 115 may include a plurality of first metal wedges 115a positioned in the first metal layer 113 and a plurality of second metal wedges 115b positioned in the second metal layer 114.

Here, the first metal wedge 115a and the second metal wedge 115b may be spaced apart from each other by a regular interval.

In addition, the mutual spacing t0 between the first metal wedge 115a and the second metal wedge 115b may be 2 to 10 um.

Therefore, the mutual spacing t0 between the first metal wedge 115a and the second metal wedge 115b may be formed to be the lower limit value of 2 um or more, so that the effect of preventing a fire from occurring due to excessive current density of the electrode current collector 110 in which the first metal layer 113 and the second metal layer 114 are laminated on both surfaces of the polymer layer 112 may be implemented. That is, the mutual spacing t0 between the first metal wedge 115a and the second metal wedge 115b may be formed to be the lower limit value of 2 um or more, thereby significantly improving thermal stability.

On the other hand, the mutual spacing t0 between the first metal wedge 115a and the second metal wedge 115b may be formed to be the upper limit value of 10 um or less, thereby significantly facilitating welding and significantly increasing conductivity.

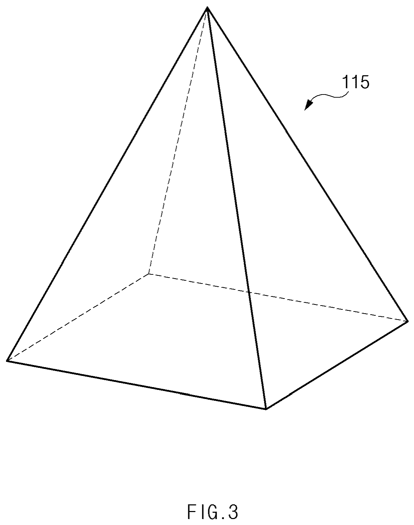

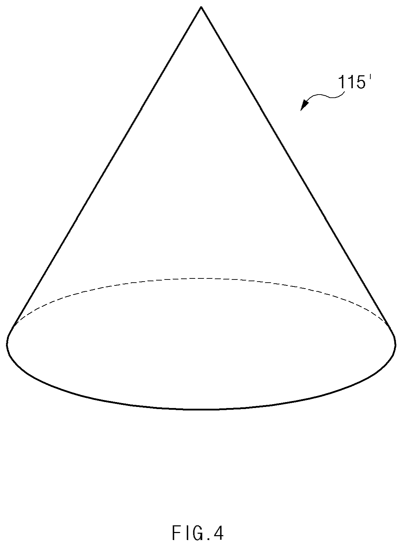

FIG. 3 is a perspective view showing an example of an electrode wedge in an electrode current collector according to an embodiment of the present disclosure, and FIG. 4 is a perspective view showing another example of an electrode wedge in an electrode current collector according to an embodiment of the present disclosure.

Meanwhile, referring to FIGS. 2 to 4, the metal wedge 115 may be provided in the form of a pyramid or a cone with its apex facing the polymer layer 112. Here, the height h1 and width w1 of the metal wedge 115 may be formed to be, for example, 1 to 5 um.

And, referring to FIG. 3, the metal wedge 115 may be formed, as an example, in the form of a pyramid having a three-dimensional shape with a polygonal base and a triangular side. Additionally, the metal wedge 115 may be formed specifically, for example, in the form of a triangular pyramid or a square pyramid. Here, the metal wedge 115 may be formed more specifically, for example, in the form of a square pyramid. In this case, the height and width w1 of one side of the metal wedge 115 may be formed to be, for example, 1 to 5 um.

Additionally, referring to FIG. 4, the metal wedge 115' may be formed, as another example, in the form of a cone having a three-dimensional shape with a circular base and a curved side. In this case, the height and diameter of the metal wedge 115 may be formed to be, for example, 1 to 5 um.

Meanwhile, referring to FIG. 2, as a first example of the electrode tab 111, the first metal wedge 115a and the second metal wedge 115b may be positioned parallel to each other in the stacking direction. Here, in the first example of the electrode tab 111, the thicknesses of the first metal layer 113 and the second metal layer 114 may be the same. In this case, for example, the thicknesses of the first metal layer 113 and the second metal layer 114 may be 0.5 to 1 um.

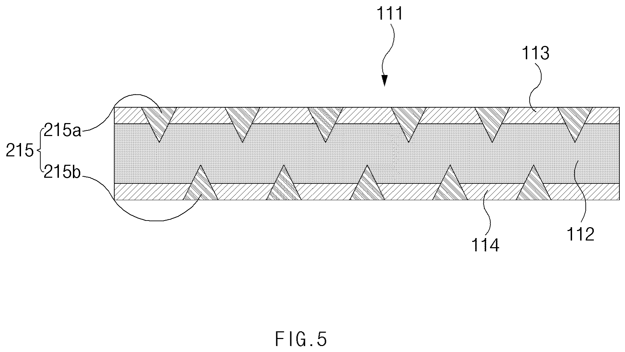

FIG. 5 is a cross-sectional view showing a second example of an electrode tab in an electrode current collector according to an embodiment of the present disclosure.

Meanwhile, referring to FIG. 5, as a second example of the electrode tab 111, the first metal wedge 215a and the second metal wedge 215b in the metal wedge 215 may be positioned alternately in the stacking direction. Here, in the second example of the electrode tab 111, the thicknesses of the first metal layer 113 and the second metal layer 114 may be the same as each other. In this case, for example, the thicknesses of the first metal layer 113 and the second metal layer 114 may be 0.5 to 1 um.

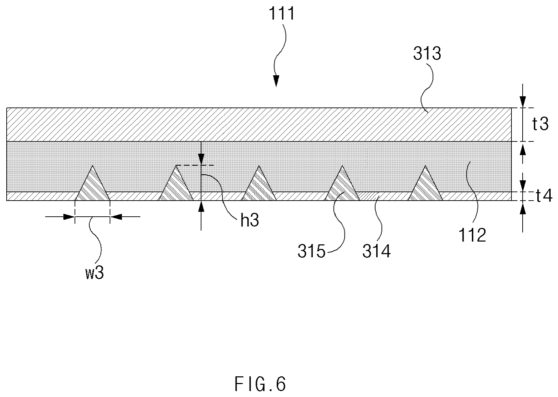

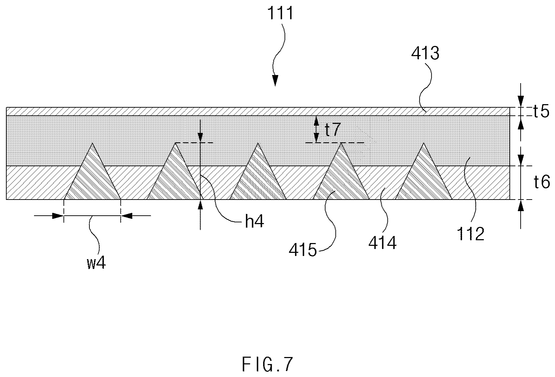

FIG. 6 is a cross-sectional view showing a third example of an electrode tab in an electrode current collector according to an embodiment, and FIG. 7 is a cross-sectional view showing a fourth example of an electrode tab in an electrode current collector according to an embodiment.

Referring to FIGS. 6 and 7, as a third example and a fourth example of the electrode tab 111, the thicknesses t3, t5 of the first metal layers 313, 413 and the thicknesses t4, t6 of the second metal layers 314, 414 may be formed to be different from each other. In this case, the metal wedges 315, 415 may be provided in the second metal layers 314, 414.

And, referring to FIG. 6, as a third example of the electrode tab 111, the thickness t3 of the first metal layer 313 may be formed to be thicker than the thickness t4 of the second metal layer 314. Here, for example, the thickness t3 of the first metal layer 313 may be 1 to 3 um, and the thickness t4 of the second metal layer 314 may be 0.2 to 0.5 um. In this case, the height h3 and width w3 of the metal wedge 315 may be formed to be greater than the thickness t4 of the second metal layer 314.

Meanwhile, referring to FIG. 7, as a fourth example of the electrode tab 111, the thickness t5 of the first metal layer 413 may be formed to be thinner than the thickness t6 of the second metal layer 414. Here, for example, the thickness t5 of the first metal layer 413 may be 0.2 to 0.5 um, and the thickness t6 of the second metal layer 414 may be 1 to 3 um. In this case, the height h4 and width w4 of the metal wedge 415 may be formed to be greater than the thickness t6 of the second metal layer 414. Here, for example, the height h4 and width w4 of the metal wedge 415 may be 1.5 to 5 um.

In addition, the mutual spacing t7 between the metal wedge 415 and the first metal layer 413 may be 2 to 10 um.

Therefore, the mutual spacing t7 between the metal wedge 415 and the first metal layer 413 may be formed to be the lower limit value of 2 um or more, so that the effect of preventing a fire from occurring due to excessive current density of the electrode current collector 110 in which the first metal layer 113 and the second metal layer 114 are laminated on both surfaces of the polymer layer 112 may be implemented. That is, the mutual spacing t7 between the metal wedge 415 and the first metal layer 413 may be formed to be the lower limit value of 2 um or more, thereby significantly improving thermal stability.

On the other hand, the mutual spacing t7 between the metal wedge 415 and the first metal layer 413 may be formed to be the upper limit value of 10 um or less, thereby significantly facilitating welding and significantly increasing conductivity.

Referring to FIGS. 1 and 2, in the electrode current collector 110 according to an embodiment of the present disclosure configured as described above, the metal wedges 115 may be inserted into the polymer layer 112 in the metal layer located at the part forming the electrode tab 111 in the metalized electrode current collector 110 in which metal layers are laminated on both surfaces of the polymer layer 112, thereby having the effect of significantly improving weldability. That is, when the electrode tabs 111 respectively provided on the multiple electrode current collectors 110 are mutually welded to form an electrode assembly and when the electrode tabs 111 and the electrode leads are welded, the metal wedges 115 are inserted into the polymer layer 112 at the welded portion, so that the thickness of the polymer layer 112 is formed thinly, and the interval between the metal portions located on both surfaces of the polymer layer 112 is narrowed, thereby having the effect of significantly improving welding. Ultimately, when welding using a laser or ultrasonic wave, it is possible to prevent weldability from deteriorating because the laser or ultrasonic wave may not pass through the polymer layer 112.

### Electrode assembly according to embodiment

Hereinafter, an electrode assembly according to an embodiment of the present disclosure will be described.

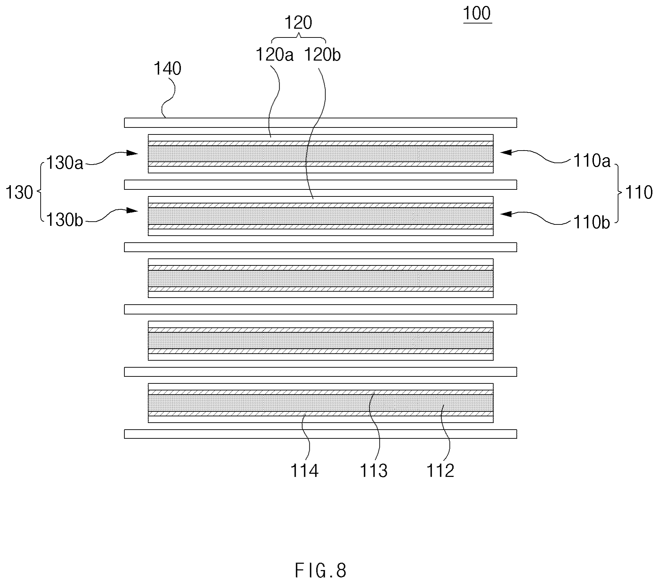

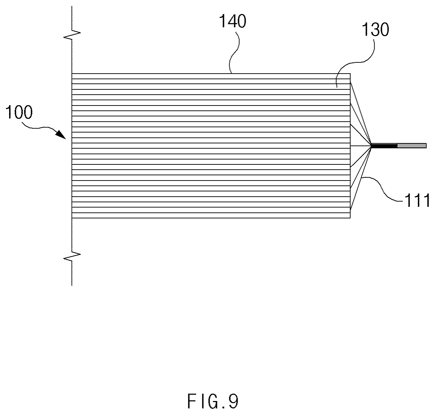

FIG. 8 is a cross-sectional view showing an electrode assembly according to an embodiment of the present disclosure, and FIG. 9 is a side view showing an electrode assembly according to an embodiment of the present disclosure.

Referring to FIGS. 1, 2, 8, and 9, the electrode assembly 100 according to an embodiment of the present disclosure is an electrode assembly 100 in which electrodes 130 and separators 140 are alternately stacked, wherein the electrode 130 includes an electrode current collector 110 including an electrode tab 111 extending at an end, and the electrode current collector 110 includes a polymer layer 112 and a first metal layer 113 and a second metal layer 114 laminated on both surfaces of the polymer layer 112 in the stacking direction, wherein a metal wedge 115 inserted into the polymer layer 112 is positioned in at least one of the first metal layer 113 or the second metal layer 114 in the electrode tab 111.

The electrode assembly 100 according to an embodiment of the present disclosure relates to an electrode assembly 100 including an electrode current collector 110 according to an embodiment described above. Therefore, this embodiment is to be described by omitting or briefly describing the content overlapping with the above-described embodiment and focusing on differences.

More specifically, the electrode assembly 100 according to an embodiment of the present disclosure is a power generating element that can be charged and discharged, and forms a structure in which electrodes 130 and separators 140 are combined and alternately stacked.

The electrode 130 includes an electrode current collector 110 including an electrode tab 111 extending at an end.

Here, the electrode 130 may include an electrode current collector 110 and an electrode active material 120 coated on one or both surfaces of the electrode current collector 110. In this case, the electrode 130 may be formed with a coated portion where the electrode active material 120 is coated on the electrode current collector 110 and an uncoated portion where the electrode active material 120 is not coated on the electrode current collector 110. In this case, an electrode tab 111 may be positioned in the uncoated portion of the electrode current collector 110.

The electrode current collector 110 may include a polymer layer 112 and a first metal layer 113 and a second metal layer 114 laminated on both surfaces of the polymer layer 112 in the stacking direction. In this case, a metal wedge 115 inserted into the polymer layer 112 is positioned in at least one of the first metal layer 113 or the second metal layer 114 in the electrode tab 111.

Meanwhile, the polymer layer 112 may be formed of a material including, for example, polyethylene terephthalate (PET), polyimide (PI), or polyethylenenaphthalate (PEN).

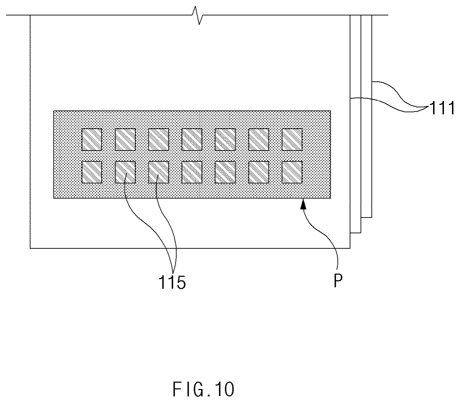

FIG. 10 is a perspective view showing an electrode tab of an electrode current collector in an electrode assembly according to an embodiment of the present disclosure.

Meanwhile, referring to FIGS. 8 to 10, in the electrode assembly 100, multiple electrodes 130 and separators 140 may be stacked. In this case, the electrode tabs 111 of the electrode current collectors 110 provided on each of multiple electrodes 130 are collected and welded together, and the metal wedges 115 may be positioned at the welded portion P of the electrode tab 111. Accordingly, when welding the metalized electrode current collector 110, the metal wedges 115 may be positioned at the welded portion P of the electrode tab 111, thereby significantly improving weldability. That is, the weldability between the electrode tabs 111 and the weldability between the electrode tabs 111 and the electrode lead may be significantly improved.

Meanwhile, the electrode 130 may include a positive electrode 130a and a negative electrode 130b. And, the separator 140 separates the positive electrode 130a and the negative electrode 130b from each other to electrically insulate them.

The positive electrode 130a may include a positive electrode current collector 110a and a positive electrode active material 120a provided on one surface of the positive electrode current collector 110a. In this case, the positive electrode 130a may include a positive electrode uncoated portion, which is a region where the positive electrode active material 120a is not coated.

The positive electrode active material 120a may be made of lithium manganese oxide, lithium cobalt oxide, lithium nickel oxide, lithium iron phosphate, or a compound or mixture including one or more of these.

The negative electrode 130b may include a negative electrode current collector 110b and a negative electrode active material 120b provided on one surface of the negative electrode current collector 110b. In this case, the negative electrode 130b may include a negative electrode uncoated portion, which is a region where the negative electrode active material 120b is not coated.

The negative electrode active material 120b may be made of, for example, artificial graphite, lithium metal, lithium alloy, carbon, petroleum coke, activated carbon, graphite, silicon compound, tin compound, titanium compound, or an alloy thereof. In this case, the negative electrode active material 120b may further include, for example, non-graphite silica (SiO), silicon carbide (SiC), or the like.

Meanwhile, the positive electrode current collector 110a and the negative electrode current collector 110b may include a polymer layer 112 and a first metal layer 113 and a second metal layer 114 laminated on both surfaces of the polymer layer 112 in the stacking direction.

In this case, the first metal layer 113 and the second metal layer 114 located on the positive electrode current collector 110a may include an aluminum material, and the first metal layer 113 and the second metal layer 114 located on the negative electrode current collector 110b may include a copper material.

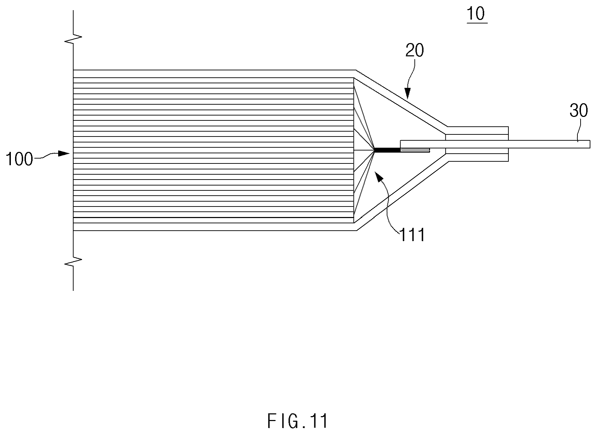

FIG. 11 is a cross-sectional view showing a secondary battery including an electrode current collector according to an embodiment of the present disclosure.

Meanwhile, referring to FIG. 11, a secondary battery 10 may be manufactured by including an electrode assembly 100 according to an embodiment of the present disclosure configured as described above. That is, the electrode assembly 100 may be accommodated in a pouch 20 to form a secondary battery 10. In this case, a secondary battery 10 may be formed by further including an electrode lead 30 that is connected to the electrode assembly 100 to electrically connect it to the outside of the pouch 20.

### Method for manufacturing electrode current collector according to embodiment

Hereinafter, a method for manufacturing an electrode current collector according to an embodiment of the present disclosure will be described.

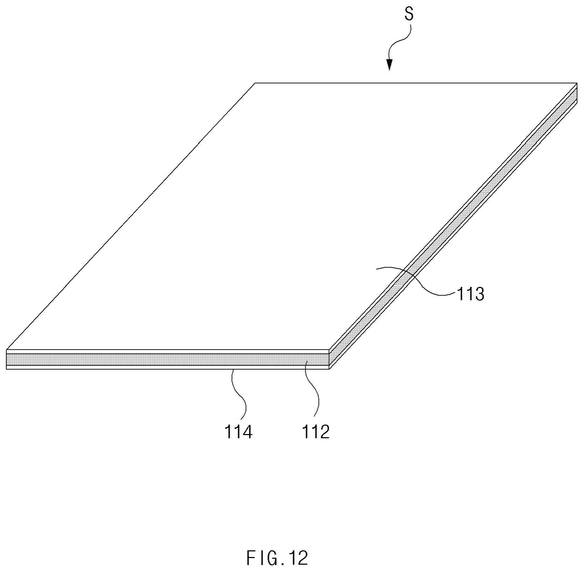

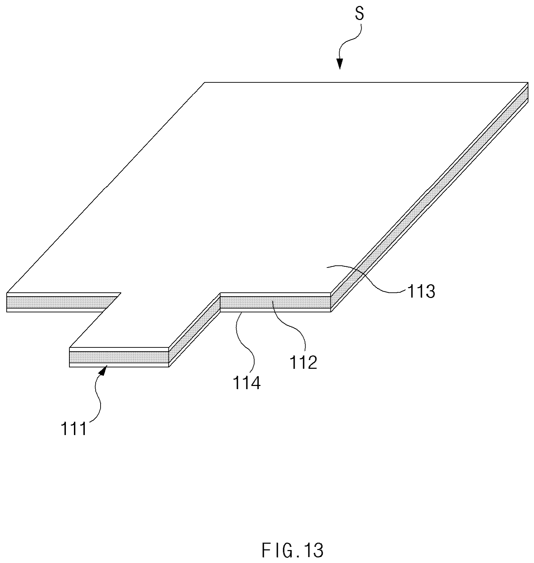

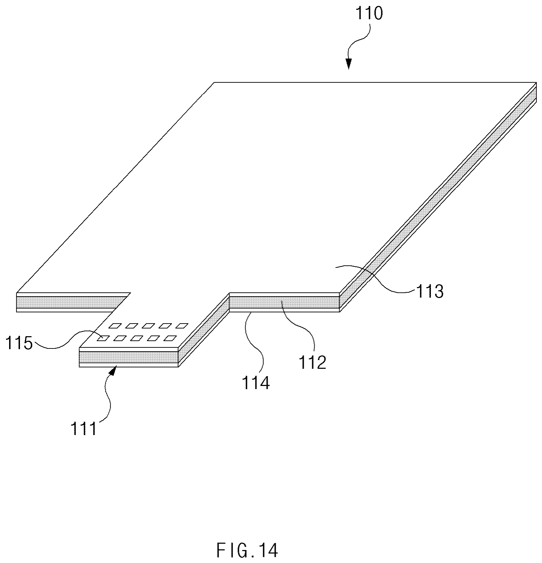

FIG. 12 is a perspective view showing a lamination process in a method for manufacturing an electrode current collector according to an embodiment of the present disclosure, FIG. 13 is a perspective view showing a tab formation process in a method for manufacturing an electrode current collector according to an embodiment of the present disclosure, and FIG. 14 is a perspective view showing a tab wedge insertion process in a method for manufacturing an electrode current collector according to an embodiment of the present disclosure.

Referring to FIGS. 12 to 14, the method for manufacturing the electrode current collector according to an embodiment of the present disclosure includes a lamination process for laminating a first metal layer 113 and a second metal layer 114 on both surfaces of a polymer layer 112 to form a stack S, a tab formation process for forming an electrode tab 111 by notching an end portion of the stack S, and a wedge insertion process for inserting a metal wedge 115 into at least one of the first metal layer 113 or the second metal layer 114 in the electrode tab 111 up to the polymer layer 112.

The method for manufacturing an electrode current collector according to an embodiment of the present disclosure relates to a method for manufacturing an electrode current collector according to an embodiment of the present disclosure and an electrode current collector included in an electrode assembly according to an embodiment of the present disclosure, which are described above.

Therefore, the embodiment of the method for manufacturing an electrode current collector according to an embodiment of the present disclosure is to be described by omitting or briefly describing the content overlapping with the embodiments of the present disclosure described above and focusing on differences.

More specifically, referring to FIG. 12, in the lamination process, the stack S is formed by laminating the first metal layer 113 and the second metal layer 114 on both surfaces of the polymer layer 112.

Additionally, in the lamination process, the first metal layer 113 and the second metal layer 114 may be laminated on both surfaces of the polymer layer 112 through deposition or lamination.

Referring to FIG. 13, in the tab formation process, an electrode tab 111 is formed by notching an end portion of the stack S.

That is, in the tab formation process, the electrode tab 111 may be formed in a protruding shape by cutting one side of the stack S in which the first metal layer 113 and the second metal layer 114 are laminated on both surfaces of the polymer layer 112.

Additionally, the tab formation process may include notching so that the electrode tab 111 is formed in the stack S using a punch die or laser.

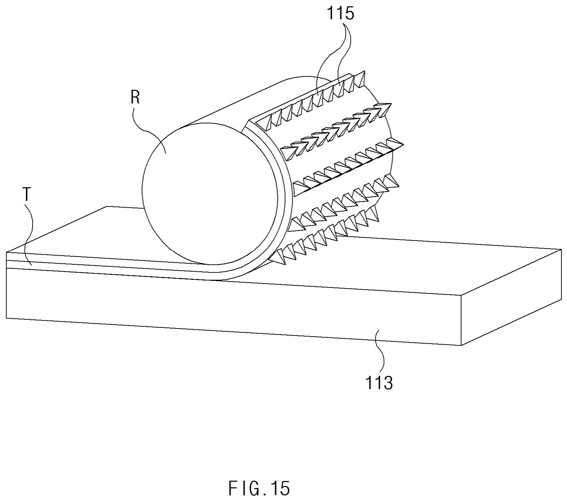

FIG. 15 is a perspective view showing a tab wedge insertion process through a roll in a method for manufacturing an electrode current collector according to an embodiment of the present disclosure.

Referring to FIGS. 2, 14, and 15, in the wedge insertion process, a metal wedge 115 is inserted into at least one of the first metal layer 113 or the second metal layer 114 in the electrode tab 111 up to the polymer layer 112.

The metal wedge 115 may include a first metal wedge 115a and a second metal wedge 115b.

Additionally, in the wedge insertion process, the multiple first metal wedges 115a may be inserted into the first metal layer 113, and the multiple second metal wedges 115b may be inserted into the second metal layer 114.

In addition, in the wedge insertion process, a sheet T on which the metal wedges 115 are positioned is pressed through a roller R, and the metal wedges 115 positioned on the sheet T may be inserted into at least one of the first metal layer 113 or the second metal layer 114.

Referring to FIGS. 2, 5, and 12, in the lamination process, the first metal layer 113 and the second metal layer 114 may be laminated so that the thickness t1 of the first metal layer 113 and the thickness t2 of the second metal layer 114 are the same as each other, as a first example and a second example. Here, in the lamination process, the first metal layer 113 and the second metal layer 114 may be formed by depositing them on both surfaces of the polymer layer 112.

In this case, referring to FIG. 2, in the lamination process, the first metal wedge 115a and the second metal wedge 115b may be positioned parallel to each other in the stacking direction, as a first example.

On the other hand, referring to FIG. 5, in the lamination process, the first metal wedge 215a and the second metal wedge 215b in the metal wedge 215 may be positioned alternately in the stacking direction, as a second example.

Additionally, referring to FIGS. 6 and 7, in the lamination process, the first metal layers 313, 413 and the second metal layers 314, 414 may be laminated so that the thicknesses t3, t5 of the first metal layers 313, 413 and the thicknesses t4, t6 of the second metal layers 314, 414 are different from each other, as a third example and a fourth example. Additionally, in the lamination process, a layer having a relatively thin thickness of the first metal layers 313, 413 and the second metal layers 314, 414 may be formed through deposition, and a layer having a relatively thick thickness may be formed through lamination by applying heat and pressure.

Here, referring to FIG. 6, in the lamination process, as a third example, the thickness t3 of the first metal layer 313 may be formed to be thicker than the thickness t4 of the second metal layer 314. In this case, in the wedge insertion process, the metal wedge 315 may be inserted into the second metal layer 314.

Meanwhile, referring to FIG. 7, in the lamination process, as fourth example, the thickness t5 of the first metal layer 413 may be formed to be thinner than the thickness t6 of the second metal layer 414. In this case, in the wedge insertion process, the metal wedge may be inserted into the second metal layer 414. Here, in the wedge insertion process, the metal wedge 415 having a height h4 greater than the thickness t6 of the second metal layer 414 may be inserted into the second metal layer 414.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10: Secondary battery
20: Pouch
30: Electrode lead
100: Electrode assembly
110: Electrode current collector
110a: Positive electrode current collector
110b: Negative electrode current collector
111: Electrode tab
112: Polymer layer
113, 313, 413: First metal layer
114, 314, 414: Second metal layer
115, 115', 215, 315, 415: Metal wedge
115a, 215a: First metal wedge
115b, 215b: Second metal wedge
120: Electrode active material
120a: Positive electrode active material
120b: Negative electrode active material
130: Electrode
130a: Positive electrode
130b: Negative electrode
140: Separator
P: Welded portion
R: Roller
S: Stack
T: Sheet

## Claims

1. An electrode current collector comprising an electrode tab extending at an end, the electrode current collector comprising:
a polymer layer and a first metal layer and a second metal layer laminated on both surfaces of the polymer layer,
wherein in the electrode tab, a metal wedge inserted into the polymer layer is positioned in at least one of the first metal layer or the second metal layer.

2. The electrode current collector according to claim 1,
wherein the metal wedge comprises a plurality of first metal wedges positioned in the first metal layer and a plurality of second metal wedges positioned in the second metal layer.

3. The electrode current collector according to claim 2,
wherein the first metal wedge and the second metal wedge are positioned parallel to each other in the stacking direction.

4. The electrode current collector according to claim 2,
wherein the first metal wedge and the second metal wedge are spaced apart from each other by a regular interval.

5. The electrode current collector according to claim 2,
wherein the first metal wedge and the second metal wedge are positioned alternately in the stacking direction.

6. The electrode current collector according to claim 2,
wherein the mutual spacing between the first metal wedge and the second metal wedge is 2 to 10 um.

7. The electrode current collector according to claim 1,
wherein the thickness of the first metal layer and the thickness of the second metal layer are formed to be different from each other.

8. The electrode current collector according to claim 7,
wherein the metal wedge is positioned in the second metal layer.

9. The electrode current collector according to claim 8,
wherein the thickness of the second metal layer is formed to be thicker than the thickness of the first metal layer, and
the height of the metal wedge is formed to be greater than the thickness of the second metal layer.

10. The electrode current collector according to claim 8,
wherein the mutual spacing between the metal wedge and the first metal layer is 2 to 10 um.

11. The electrode current collector according to claim 1,
wherein the metal wedge is provided in the form of a pyramid or a cone with its apex facing the polymer layer.

12. An electrode assembly in which electrodes and separators are alternately stacked,
wherein the electrode comprises an electrode current collector comprising an electrode tab extending at an end, and
the electrode current collector comprises a polymer layer and a first metal layer and a second metal layer laminated on both surfaces of the polymer layer in the stacking direction,
wherein in the electrode tab, a metal wedge inserted into the polymer layer is positioned in at least one of the first metal layer or the second metal layer.

13. The electrode assembly according to claim 12,
wherein the multiple electrodes and separators are stacked in the electrode assembly,
wherein the electrode tabs of the electrode current collectors provided on each of the multiple electrodes are collected and welded together, and
the metal wedge is positioned at the welded portion of the electrode tabs.

14. A method for manufacturing the electrode current collector, comprising:
a lamination process for laminating a first metal layer and a second metal layer on both surfaces of a polymer layer to form a stack;
a tab formation process for forming an electrode tab by notching an end portion of the stack; and
a wedge insertion process for inserting a metal wedge into at least one of the first metal layer or the second metal layer in the electrode tab up to the polymer layer.

15. The method for manufacturing the electrode current collector according to claim 14,
wherein in the lamination process, the first metal layer and the second metal layer are formed by depositing them on both surfaces of the polymer layer.

16. The method for manufacturing the electrode current collector according to claim 14,
wherein in the lamination process, the first metal layer and the second metal layer are laminated to have different thicknesses.

17. The method for manufacturing the electrode current collector according to claim 16,
wherein in the lamination process, a layer having a relatively thin thickness of the first metal layer and the second metal layer is formed through deposition, and a layer having a relatively thick thickness is formed through lamination by applying heat and pressure.

18. The method for manufacturing the electrode current collector according to claim 14,
wherein the metal wedge comprises a first metal wedge and a second metal wedge,
wherein in the wedge insertion process, the multiple first metal wedges are inserted into the first metal layer, and the multiple second metal wedges are inserted into the second metal layer.

19. The method for manufacturing the electrode current collector according to claim 14,
wherein in the wedge insertion process, a sheet on which the metal wedges are positioned is pressed through a roller, and the metal wedges positioned on the sheet are inserted into at least one of the first metal layer or the second metal layer.
